# FASCICULE DE BREVET EUROPEEN

(11) **EP 3 374 323 B1**
(45) Date de publication et mention de la délivrance du brevet: **23.10.2019**
(21) Numéro de dépôt: 16794969.2
(22) Date de dépôt: 04.11.2016
(51) Int. Cl.: C03C 1/00, C03B 5/00, C03B 37/05, B09B 3/00, C03C 13/06, C21B 5/00

(54) **PROCÉDÉ DE PRODUCTION DE LAINE DE ROCHE ET DE FONTE VALORISABLE**
VERFAHREN ZUR HERSTELLUNG VON STEINWOLLE UND RÜCKGEWINNBAREM GUSSEISEN
METHOD FOR PRODUCING ROCK WOOL AND RECOVERABLE CAST IRON

(30) Priorité: 09.11.2015 FR 1560700
(43) Date de publication de la demande: 19.09.2018
(73) Titulaire: Eco'ring, 42110 Feurs (FR); Eurecat S.A., 07800 La Voulte-sur-Rhône (FR)
(72) Inventeur: SOKOLOFF, Bruno, 69004 Lyon (FR); PICARD, Lyonel, 42110 Feurs (FR)
(74) Mandataire: Casalonga
(86) Numéro de dépôt international: PCT/EP2016/076630
(87) Numéro de publication internationale: WO 2017/080913

(56) Documents cités:
- WO-A1-97/30002
- WO-A1-99/28252
- WO-A1-02/057194
- WO-A2-96/14454
- WO-A2-98/45215
- WO-A2-2006/103376
- US-A- 5 198 190
- US-A1- 2004 177 650

## Description

L'invention concerne un procédé de production de laine de roche et de fonte par fusion d'un mélange de matériaux avec un adjuvant contenant de l'alumine pour obtenir une laine de roche ayant la composition standard telle que (en % en poids) : Al2O3 : 18-22 ; SiO2 : 40-50 ; CaO : 10-15 ; MgO : <10 ; FeO <2; Na2O <4 ; K20 <2, du type comprenant les opérations de produire par la fusion un laitier et une fonte, de séparer le laitier et la fonte et de soumettre le laitier à une opération de fibrage puis de collage pour obtenir la laine de roche.

Des procédés de ce type, pour la production de laine de roche sont déjà connus. Il est ainsi connu de fabriquer la laine de roche à partir de matières premières telles que du basalte et du laitier de haut-fourneau. Le document WO 96/14454 décrit un produit fibreux à teneur modérée en alumine, fabriqué par fusion d'un mélange de matériaux incluant des roches et des déchets tels que des laitiers de fonderie dans un four électrique ou un cubilot et par fibrage de la matière fondue.

A ces matières premières de base on ajoute des fondants et du coke pour faire fondre le mélange en fusion dans un réacteur tel qu'un cubilot ou four électrique.

Après la séparation de la fonte, le laitier est fibré, de façon connue en soi, par projection sur des rotors à grande vitesse. On ajoute ensuite des produits de collage ainsi que des éléments spécifiques à chaque usage, puis le matelas de laine ainsi obtenu est polymérisé et calandré emballé.

Les procédés de fabrication de laine de roche ont pour objectif de produire très majoritairement des laitiers et minoritairement de la fonte. Cette dernière résulte de la réduction du fer contenu en tant qu'impureté dans les matières premières de charge. La température typique d'exploitation d'un cubilot à roche ou d'un four électrique est de l'ordre de 1450°C à 1550°C.

Les matières premières de charge minérale de base sont principalement du basalte ou du laitier de hauts fourneaux de composition suivante :

| Type basalte (% poids) | Type laitier de haut fourneau (% poids) |
|---|---|
| ▪ SiO2 : 40-55 | 35-40 |
| ▪ Al2O3 : 12-17 | 8-12 |
| ▪ Fe2O3 : 8-12 | 0.2-0.8 |
| ▪ MgO : 4-6 | 7-10 |
| ▪ CaO : 5-8 | 38-42 |
| ▪ Na2O : 2-4 | 0-0.5 |
| ▪ K20 : 2-3 | 0-0.5 |
| ▪ TiO2 : 1.5-3 | 0.8-1.2 |
| ▪ P2O5 : 0.4-0.5 | 0-0.5 |

Elles sont broyées et calibrées avant d'être chargées dans le four et mélangées aux ajouts, c'est-à-dire tout additif connu de l'homme du métier pour obtenir une bonne fusion et une bonne coulée.

On ajoute également du coke de fonderie. Le coke sert à apporter l'énergie nécessaire au fonctionnement du cubilot à roche et en appoint du four électrique et aussi à réduire certains oxydes métalliques tels l'oxyde de fer. Dans un cubilot, il est par exemple déposé en couches séparées.

Pour obtenir que la laine de roche soit de couleur jaune clair et pour que la composition chimique de la laine corresponde au standard indiqué plus haut, il s'est avéré nécessaire de corriger la charge minérale de base en unités d'alumine A1203. D'autre part, les unités de fer contenues dans la charge minérale de base doivent être extraites pour respecter cette composition chimique standard et préserver la couleur spécifiée à jaune clair.

L'ajustement de la teneur en alumine est réalisé classiquement par ajout de bauxite, car c'est une matière peu coûteuse et dont la composition chimique typique est la suivante, selon les espèces de bauxite de karst ou de bauxite latéritique :

| | |
|---|---|
| Alumine sous forme d'hydrate d'alumine | : 48-60% |
| SiO2 | : 1 à 7% |
| Fe2O3 | : 2 à 23% |
| TiO2 | : 2 à 4% |
| CaO | : 0 à 4% |
| H20 (de constitution) | : 10 à 30% |

Or, la bauxite est constituée d'hydrate d'alumine, de teneur en eau de constitution de 10 à 30%. La déshydratation qu'il faut alors faire étant très endothermique, la fusion de la bauxite est très énergivore.

De plus, la bauxite apporte des unités de Fe qu'il convient d'extraire par fusion réductrice sous forme de fonte. Cette extraction est réalisée grâce au coke, élément réducteur traditionnel de l'oxyde de fer en sidérurgie. Typiquement la réduction des unités de fer contenues soit dans les charges minérales, notamment le basalte et le laitier de haut-fourneau, soit dans la bauxite, produit une faible quantité de fonte au phosphore dont la composition chimique est la suivante :

| | |
|---|---|
| Fe | 92-95% |
| C | 1.5 à 4% |
| Si | 2.5 à 3.5% |
| P | 0.5 à 4% |
| S | 0.1 à 0.5% |
| Mn | 0.05 à 0.2% |
| Cr | 0.02 à 0.2% |
| Ti | 0.02 à 0.2% |
| Al | 0.01 à 0.1% |

Cette fonte a une valeur économique très faible et est un problème pour l'exploitant qui doit la gérer. Il la met le plus souvent en décharge.

Concernant le coke, une partie de celui-ci sert à produire la chaleur latente de transformation de l'eau de constitution de la bauxite.

D'autre part, il est avéré que l'ajout de matière aluminique de type corindon peut avoir comme conséquence la persistance dans la phase liquide de particules de matières non fondues ou des accrochages en parois, ce qui induit des problèmes en aval du procédé de type perles ou petits blocs non fondues particulièrement indésirables pour la production de fibres.

L'invention a pour but de pallier les inconvénients des procédés de l'état de la technique.

Pour atteindre ce but, le procédé selon l'invention est principalement caractérisé en ce que l'on utilise, pour l'ajustement de la teneur en alumine, des catalyseurs contenant de l'alumine sous forme d'Al2O3 poreuse et particulièrement fusible.

Plus précisément, l'invention concerne un procédé de production de laine de roche et de fonte par fusion d'un mélange de matériaux tels que du basalte, du laitier de haut fourneau, du coke et des composants nécessaires à la fusion, avec un adjuvant contenant de l'alumine, ledit adjuvant permettant d'ajuster la teneur en alumine pour obtenir une laine de roche ayant la composition suivante (en % pds) : Al2O3 : 18-22 ; SiO2 : 40-50 ; CaO : 10-15 ; MgO : <10 ; FeO <2 ; Na2O <4 ; K20 <2, procédé du type comprenant les opérations de production par fusion d'un laitier et d'une fonte, de séparation du laitier et de la fonte et de procéder sur le laitier à une opération de fibrage puis de collage pour obtenir la laine de roche, caractérisé en ce que l'on utilise comme adjuvant au moins un catalyseur usé et/ou au moins un adsorbant usé , ledit catalyseur et/ou adsorbant contenant de l'alumine sous forme d'Al2O3.

Ledit catalyseur et/ou adsorbant contient souvent au moins un métal, et on récupère ledit métal dans la fonte.

L'adjuvant comprend un ou plusieurs catalyseurs et/ou adsorbants. L'adjuvant comprend généralement ledit catalyseur et/ou adsorbant ainsi que de la bauxite, de préférence l'adjuvant est constitué de bauxite et dudit catalyseur et/ou adsorbant. L'adjuvant peut être constitué dudit catalyseur et/ou adsorbant.

Généralement, le catalyseur et/ou adsorbant contient au moins un métal choisi dans le groupe constitué par les groupes VIB, VIIIB et VB de la Classification Périodique des Eléments. De préférence, le catalyseur et/ou adsorbant contient Ni et/ou Co et/ou Mo et/ou W et/ou V. De préférence, le catalyseur et/ou adsorbant contient également du phosphore.

De préférence, le catalyseur présente :
- une densité comprise entre 0,5 et 1, et/ou
- un volume poreux total compris entre 0,2 et 0,9 ml/g, généralement entre 0,2 et 0,8 ml/g ou 0,3 et 0,7ml/g et le plus souvent entre 0,3 et 0,6 ml/g et/ou
- une surface BET comprise entre 20 et 400 m2/g et le plus souvent entre 100 et 300 m2/g.

De préférence, l'adsorbant présente :
- une densité comprise entre 0,5 et 1, et/ou
- un volume poreux total compris entre 0,2 et 0,9 ml/g et le plus souvent entre 0,3 et 0,7 ml/g et/ou
- une surface BET comprise entre 20 et 800 m2/g, de préférence entre 20 et 400m2/g et le plus souvent entre 100 et 400 m2/g.

Avantageusement, on utilise un catalyseur et/ou adsorbant ayant une teneur en S de 2 à 5% en poids. De préférence, avant d'être chargé dans le procédé, le catalyseur et/ou adsorbant est soumis éventuellement à une étape de grillage de façon à réduire sa teneur en S à au plus 5% pds.

La fusion a lieu entre 1250°C et 1600°C, de préférence 1400°C-1500°C.

Ce procédé produit de la laine de roche et de fonte par fusion en une seule étape.

### Le procédé décrit sur les figures

La description de l'invention sera mieux comprise en se référant aux figures, et d'autres buts, caractéristiques, détails et avantages de celle-ci apparaîtront plus clairement dans la description explicative qui va suivre faite en référence aux dessins schématiques annexés donnés uniquement à titre d'exemple illustrant un seul mode de réalisation de l'invention et dans lesquels :
- la figure 1 est une vue schématique illustrant le procédé de fabrication de laine de roche et de fonte selon l'invention, en utilisant un cubilot à laine de roche, et
- la figure 2 est une vue schématique d'un four de fusion utilisable dans le procédé selon l'invention, à savoir un four électrique à électrodes submergées.

L'invention concerne un procédé de production de laine de roche et de fonte par fusion dans un four de fusion tel qu'un cubilot à roche ou un four électrique à électrodes submergées.

La particularité de l'invention réside dans le fait de substituer en tout ou partie les apports d'alumine de type bauxite ou autre par l'alumine contenue dans des catalyseurs usés. Cette alumine sous forme d'Al2O3 possède une grande porosité et fusibilité.

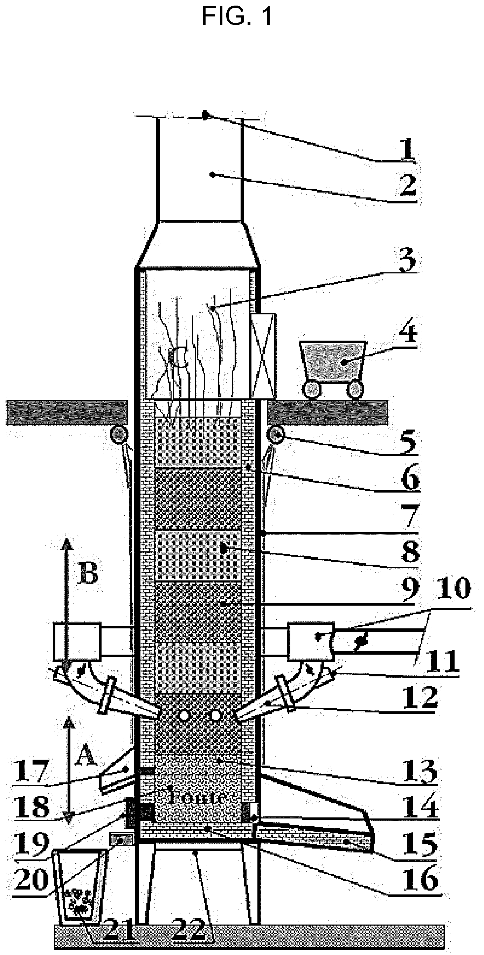

Comme le montre schématiquement la figure 1, la production de laine de roche comporte successivement, l'étape de production, dans un cubilot à roche 1, par fusion d'un laitier et d'une fonte, l'étape de séparation du laitier et de la fonte qui contient l'essentiel des métaux, l'étape au cours de laquelle le laitier est soumis à une opération de fibrage et l'étape de collage pour obtenir la laine de roche. Les deux dernières opérations sont connues en soi et n'ont donc pas besoin d'être décrites.

Concernant le cubilot représente en figure 1, les charges sont introduites dans le gueulard. Le laitier et la fonte, en l'état liquide, sont retirés du cubilot.

Dans la figure 1 représentant un cubillot de fonderie, les éléments suivants désignent:
- 1 : Système de dépoussiérage
- 2 : Cheminée
- 3 : Gueulard (partie par laquelle sont chargés le minerai et le coke+castine).
- 4 : Système de chargement (il se fait par wagonnets pour les petits cubilots et par bennes pour les grosses installations)
- 5 : Arrosage (système d'arrosage de toute la partie extérieure du cubilot. L'eau coule le long de la colonne pour la refroidir et l'empêcher de fondre sous l'effet de la chaleur interne, surtout en cas de dégradation du revêtement réfractaire)
- 6 : Garnissage (en général, de brique de terre compressée à base de matériau réfractaire et assemblée au pisé)
- 7 : Colonne du cubilot (souvent en épaisse tôle au tungstène)
- 8 : Charges métalliques
- 9 : Charges (coke + castine).
- 10 : Boîte à vent (alimente les tuyères en air)
- 11 : Regard de surveillance, qui permet notamment le contrôle de la fusion
- 12 : Tuyères (injectent l'air pour activer la combustion du coke)
- 13 : Laitier (dépôt qui se forme au-dessus du bain de fonte liquide)
- 14 : Trou de coulée (débouché au moment de la coulée de la fonte dans le four de maintien)
- 15 : Chenal de coulée (placé au-dessus du four de maintien)
- 16 : Sole (partie réfractaire inférieure du cubilot)
- 17 :Trou de décrassage (destiné à l'évacuation du laitier avant prélèvement de la fonte)
- 18 :Creuset (rempli de fonte et de coke incandescent)
- 19 : Porte d'allumage
- 20 : Goulotte de récupération des eaux
- 21 : Bac à crasse (destiné à la récupération du laitier et des crasses)
- 22 : Portes de défournement (destinée au le nettoyage du cubilot refroidi, avant réfection du garnissage réfractaire).

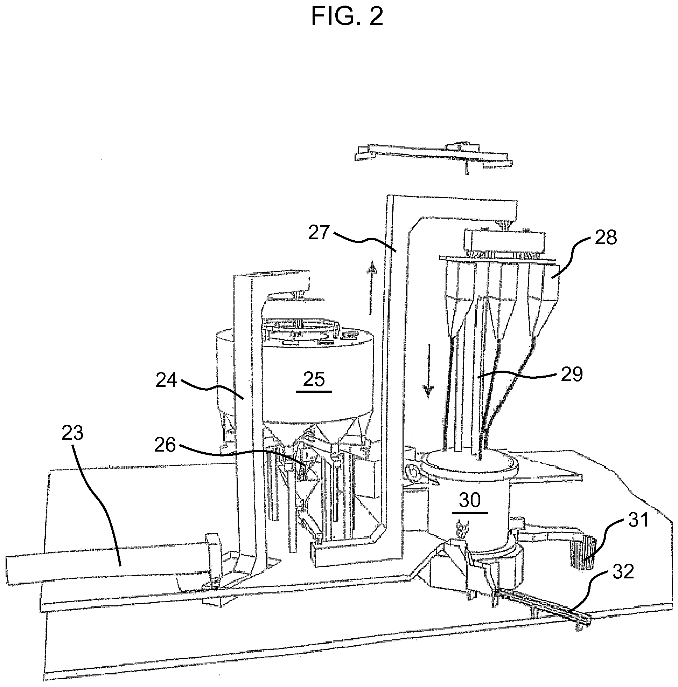

La figure 2 illustre le procédé de production du laitier et de fonte en utilisant, comme four de fusion, un four électrique à électrodes submergées. Sur cette figure, les références 28, 29 et 30 désignent respectivement les trémies de chargement, les électrodes et le four de fusion électrique. La sortie de la fonte s'effectue en 31 et la sortie du laitier pour la fabrication de laine de roche en 32.

Les éléments suivant désignent :
- 23 : système d'alimentation / chargement des matières
- 24 et 27 : élévateurs
- 25 : trémie de stockage
- 26 : mélangeur

### Les catalyseurs et/ou adsorbants usés

Le procédé s'applique à tout type de catalyseurs et/ou adsorbants usés dont le support minéral est poreux et contient de l'alumine. Le plus souvent, ils contiennent au moins un métal.

On entend par catalyseurs et/ou adsorbants usés, des catalyseurs et/ou adsorbants que leurs propriétaires ne veulent plus utiliser et qui sont destinés à la destruction. Pour un catalyseur, la raison peut être une dégradation de leur qualité, essentiellement au niveau de leurs activités catalytiques et de leurs propriétés mécaniques. Cela peut concerner des catalyseurs contaminés par des éléments indésirables pendant leur utilisation. Leur fin de vie est aussi souvent due à une perte de résistance mécanique ou une dimension inadéquate. Pour un adsorbant, la raison peut être une dégradation de leur qualité, essentiellement au niveau de leurs capacités d'adsorption et de leurs propriétés mécaniques.

L'invention s'applique aux catalyseurs et/ou adsorbants, et de préférence aux catalyseurs.

Une large gamme de catalyseurs et/ou adsorbants peut être utilisée dans le procédé selon l'invention. Le catalyseur comprend support poreux contenant de l'alumine sous forme Al2O3 et au moins un élément métallique de la classification périodique des éléments. L'élément métallique est de préférence choisi dans les groupes VB, VIB, VIIIB, et de préférence, le métal est choisi parmi Ni et/ou Co et/ou Mo et/ou W et/ou V.

Selon la composition du catalyseur et/ou adsorbant, la présence et la teneur en certains éléments métalliques ou non métalliques du catalyseur et/ou adsorbant, la quantité de catalyseur et/ou adsorbant comme adjuvant pourra être modifiée.

Ce sont généralement des catalyseurs d'hydrotraitement (HDT) ou des catalyseurs de craquage catalytique (FCC, Fluid Catalytic Cracking). Les catalyseurs d'hydrotraitement (HDT, appelés aussi HPC pour Hydroprocessing) comprennent en particulier les catalyseurs d'hydrodésulfuration (HDS), d'hydro-déazotation (HDN), et d'hydrocraquage. Ce peuvent être aussi, sans que cette liste soit exhaustive, des catalyseurs d'hydrogénation, d'hydrogénation sélective ou totale. Sont également utilisables les catalyseurs de FCC (fluid catalytic cracking), les catalyseurs de la chaîne hydrogène, les catalyseurs de la chaîne Claus pour transformer H2S en S élémentaire qui sont de type alumine (souvent constitué d'alumine) ou oxyde de titane, ou encore les catalyseurs Fischer Tropsch à base de Co.

Les catalyseurs d'HDT contiennent de l'alumine et des éléments constitutifs comme Ni, Co, Mo, W, P, B et comme éléments contaminants, quand ils sont usés, du V, Ni, Fe, As, Na, Si, P, Ca. Les catalyseurs de FCC contiennent de l'alumine et des silico-aluminates.

Ce peuvent être également des catalyseurs d'hydrogénation à base de Co ou Ni et Mo et support alumine, des catalyseurs d'hydrogénation sélective ou d'hydrogénation totale à base de nickel (5 à 50% poids Ni et support alumine).

Les catalyseurs d'hydrocraquage à base de Ni et W sur support alumine et silice alumine amorphe ou cristallisée (zéolite) conviennent également.

On peut également citer des catalyseurs de craquage catalytique (FCC) à base d'alumine, de silice alumine et zéolite, ou encore des catalyseurs de la chaîne hydrogène à base de Ni, Fe, Cr, Cu, Zn, ou encore des catalyseurs de la chaîne Claus de type alumine ou oxyde de titane, ou encore des catalyseurs Fischer Tropsch à base de Co.

Cette liste n'est pas exhaustive.

Les adsorbants sont utilisés dans des applications diverses de purification de flux ou de séparation moléculaire. A titre d'exemple, on peut citer le séchage de différents flux, de l'air, ou des coupes hydrocarbonées ou d'autres mélanges gazeux. Il peut s'agir d'absorber d'autres impuretés que l'eau, comme par exemple des hydrocarbures à l'état de trace au d'autres éléments minéraux, tels que le chlore... Les adsorbants se trouvent aussi dans des applications de purification de charge dans un certain nombre d'applications comme par exemple la purification d'oléfines, la production de polyoléfines, la production d'eau oxygénée.

L'alumine activée est également utilisée dans les procédés de purification de l'eau, pour adsorber des minéraux et des nutriments non désirés, comme l'arsenic, le fluorure, le cuivre, le zinc, le plomb, la silice, les phosphates et les nitrates.

La teneur en alumine (sous forme Al2O3) dans les catalyseurs et/ou adsorbants est de 20% à 100% pds, le plus souvent de 40% à 100%. Si le catalyseur et/ou adsorbant contient une phase métallique, ou d'autres composés, la teneur supérieure de 100% est diminuée d'autant, la limite supérieure peut être de 95%.

Pour les catalyseurs d'hydrotraitement, elle est généralement de 60 à 90% et pour les catalyseurs de FCC, elle est généralement comprise entre 45% et 80%.

Le catalyseur et/ou adsorbant contient de l'alumine ; en plus de l'alumine, il peut contenir de la silice (silice-alumine), une zéolite (par ex un aluminosilicate tel que la zéolite Y) ou tout autre support habituellement utilisé dans les catalyseurs et/ou adsorbants (et notamment ceux cités plus haut) connu de l'homme du métier.

La phase minérale aluminique des catalyseurs et/ou adsorbant est un solide poreux.

Le catalyseur présente un volume poreux total typiquement compris entre 0,2 et 0,8 ml/g et le plus souvent entre 0,3 et 0,6 ml/g. Ce volume poreux est par ex de 0,5 ml/g.

Ce volume poreux correspond généralement à une taille de pores comprise entre 5 et 100 nm, le plus souvent entre 7 et 50 nm.

Une autre caractéristique de ces catalyseurs et/ou adsorbant poreux est leur relativement faible densité, précisément à cause de ce réseau poreux important. Cette densité apparente est mesurée sur base sèche (après calcination à 550°C, 2h), elle est souvent comprise entre 0,5 et 1, et le plus souvent entre 0,6 et 0,9. En présence de coke, hydrocarbures ou contaminants métalliques, cette densité peut dépasser 1 mais sans atteindre la densité élevée de la bauxite ou des matériaux du même type (densité d'au moins 2,3). Elle peut aller jusqu'à 1,5 ou 1,8.

Il est à noter que l'on considère ici que la densité correspond à la masse volumique en g/litre.

Les catalyseurs et/ou adsorbants contiennent généralement moins d'eau que la bauxite, leur teneur en eau est généralement inférieure à 5% pds et le plus souvent inférieure à 1% pds.

Les catalyseurs et/ou adsorbant peuvent se présenter sous forme de billes, pastilles, extrudés, briquettes, poudres, fragments, sables. Il sera préférable de procéder à une agglomération de calibration géométrique afin de pouvoir les charger dans le four de fusion de production de laine de roche.

Les métaux, et notamment Ni, Co, Mo, W, V appartiennent à la catégorie des métaux dits stratégiques pour laquelle il est d'importance critique de renforcer les voies de réutilisation et recyclage.

La fonte obtenue selon l'invention est valorisable car elle contient des métaux stratégiques. Ceux-ci peuvent être extraits de la fusion selon le même processus de réduction que celui de l'oxyde de fer contenu dans la bauxite, comme cela sera explicité plus loin.

Il sera également décrit ci-après le cas des catalyseurs et/ou adsorbant contenant du soufre ou du phosphore.

### Le procédé selon l'invention

Comme indiqué avant, l'invention consiste à substituer par des catalyseurs et/ou adsorbant poreux et fusibles tout ou partie des apports d'Alumine Al2O3 nécessaires à l'obtention de la composition chimique standard de la laine de roche traditionnellement réalisés à partir de bauxite.

Un intérêt majeur de l'invention est de produire en une seule étape pyrométallurgique à la fois une fonte métallique contenant les éléments métalliques Ni, Co, Mo, W, V contenus dans les catalyseurs et un laitier transformable en laine de roche.

Cette étape pyrométallurgique peut avantageusement être précédée d'une étape de grillage du catalyseur et/ou adsorbant permettant d'éliminer une fraction substantielle du carbone et du soufre contenu dans les catalyseurs et/ou adsorbants.

### L'effet du soufre

Néanmoins, il a été constaté que le pourcentage de soufre résiduel, contenu dans les catalyseurs et/ou adsorbant grillés, pouvait être nettement plus élevé, à hauteur de 3 à 4% poids, que celui traditionnellement spécifié en filière pyrométallurgique de recyclage des catalyseurs usés, à savoir inférieur à 2%.

Comme du point de vue thermodynamique, et au point de fusion d'exploitation des cubilots à roche, c'est-à-dire 1450°C-1550°C, la réduction carbothermique, c'est-à-dire avec le coke, des oxydes métalliques (tels que ceux de Ni, Co, Mo, W et V) contenus dans les catalyseurs et/ou adsorbants est parfaitement similaire à celle des oxydes de fer, voire meilleure, les unités de ces métaux (comme Ni, Co, Mo, W et V) vont se retrouver dans la fonte.

### L'effet du phosphore

Par ailleurs le dopage des catalyseurs et/ou adsorbant en phosphore constitue un avantage car celui-ci est notoirement connu comme étant un excellent fondant dans les procédés de fusion.

Enfin les unités de phosphore des catalyseurs et/ou adsorbant sont incrustées dans les porosités contribuant ainsi à l'excellente fusibilité de l'alumine des catalyseurs.

Typiquement la fonte produite par ajout de catalyseurs, en substitution partielle ou totale à l'ajout de bauxite à une composition chimique comme suit :

| | |
|---|---|
| ▪ Mo | 10 à 45% |
| ▪ Ni | 0 à 15% |
| ▪ Co | 0 à 15% |
| ▪ W | 0 à 20% |
| ▪ V | 0 à 25% |
| ▪ C | 1.5 à 4% |
| ▪ P | 3 à 8 % |
| ▪ S | 0.5 à 3% |
| ▪ Si | 2.5 à 3.5% |
| ▪ Mn | 0.05 à 0.2% |
| ▪ Cr | 0.02 à 0.2% |
| ▪ Ti | 0.02 à 0.2% |
| ▪ Al | 0.01 à 0.1% |
| ▪ Balance Fer | |

avec un point de fusion très bas de l'ordre de 1250 à 1350°C facilitant sa coulée et abaissant la consommation d'énergie au cubilot à roche.

La fonte produite est ensuite affinée au sens de sa déphosphoration pour permettre la commercialisation des métaux contenus en fonderies et aciéries dans un procédé traditionnel d'aciérie type four à arc électrique et/ou convertisseur. Les lingots de fonte sont chargés dans le four à arc et/ou convertisseur pour être traités par un procédé de déphosphoration classique et de type oxydant (procédé de déphosphoration des fontes en sidérurgie après élaboration au haut-fourneau).

Du fait de la présence de l'élément P, le phosphore, le laitier et la fonte auront un point de fusion plus bas. Cet avantage inattendu résulte en particulier de la présence importante de phosphore dans certains catalyseurs, à hauteur par exemple de 1 à 5% poids. Le phosphore est un élément dopant de certains catalyseurs, par exemple catalyseurs d'hydrotraitement, et/ou éventuellement un contaminant venant des charges pétrolières.

En conséquence, la viscosité du laitier et de la fonte en sera plus faible, leurs coulées respectives sont facilitées, et la consommation d'énergie est également abaissée par rapport au procédé conventionnel du cubilot à roche ou four électrique.

Une autre conséquence est que, suivant la composition du catalyseur et/ou adsorbant, la température de marche du cubilot ou four électrique peut être abaissée.

### Autres avantages de l'invention

L'ajout de catalyseur et/ou adsorbant à base d'alumine poreuse conduit à un avantage technique inattendu qui consiste en une exploitation considérablement simplifiée et plus économique du procédé pyrométallurgique.

### Une fusion améliorée

En effet avec des ajouts de matière aluminique de type bauxite ou corindon, il est parfois observé des difficultés de fusion, qui ont comme conséquence la persistance dans la phase liquide de particules de matière non fondue ou des accrochages sur les parois ce qui induit des problèmes en aval du procédé de production de laine de roche en termes de qualité et de rebuts de production.

En revanche, avec l'alumine poreuse contenue dans les catalyseurs et/ou adsorbants, la fusibilité est très élevée. Il est possible que cet effet inattendu soit dû à la grande porosité de ce matériau, et/ou à la présence de fondant de type phosphore au cœur même du matériau aluminique. Ainsi sa fusibilité et sa mise en solution dans la fraction minérale fondue est très bonne.

L'exploitant dispose ainsi d'une matière première de substitution de bien meilleure qualité que celle de ses enfournements traditionnels.

Cette caractéristique de fusibilité élevée correspond à une cinétique rapide de fusion, elle permet aussi de réduire le temps de séjour en zone chaude et d'augmenter ainsi la productivité de production, en comparaison avec le procédé traditionnel à la bauxite. Elle permet de réduire aussi des problèmes opératoires d'accrochage du laitier sur les parois.

Par ailleurs, on a pu constater que la présence de molybdène et/ou tungstène accélère la décantation de la phase métallique (fonte) grâce à la densité élevée du molybdène et/ou tungstène, comparée au fer dans le cas de la bauxite. Ce phénomène participe à la réduction du temps de séjour.

Ainsi, grâce à la présence de catalyseur et/ou adsorbant poreux facilement fusible en substitution à la bauxite, il est possible d'opérer le four de production de laine de roche à des températures plus faibles que le procédé conventionnel. Généralement la température est comprise entre 1350°C et 1500°C. Ainsi il est possible de réaliser de substantielles économies d'énergie et de productivité.

De plus, l'absence de chargement d'eau avec les catalyseurs en comparaison avec la bauxite - puisque les catalyseurs et/ou adsorbants contiennent généralement moins d'eau que la bauxite (teneur en eau inférieure à 5% pds, le plus souvent inférieure à 1% pds) - permet de réaliser des économies substantielles, dues à l'absence de l'effet endothermique d'évaporation de l'eau.

### Une fonte valorisable

Les rendements de récupération dans la fonte des métaux contenus dans les catalyseurs et/ou adsorbants sont excellents, typiquement supérieurs à 90% ou 95% et même supérieurs à 98% par exemple pour le Ni, Co, W et Mo.

Ceci provient aussi de deux effets concomitants inhérents à la technologie de cubilot ou du four électrique en production de laine de roche. D'une part les charges en parties supérieures du four ou du cubilot sont préchauffées par les gaz chauds du cubilot ou four électrique fortement chargés en monoxyde de carbone. Le monoxyde de carbone agit dès 750°C comme un réducteur en phase solide pour les métaux ainsi appelé pré-réduction en phase solide. On a ainsi une réaction gaz/solide, ainsi appelée pré-réduction en phase solide. C'est un phénomène bien connu pour la production d'éponge de fer à partir de minerais, qui se trouve avantageusement mis en œuvre dans le cadre de l'invention.

Enfin, quand les charges arrivent dans la zone pâteuse de fusion, les métaux sont immédiatement et complètement réduits (tels que ceux des groupes VIII et VIB, comme type Fe, Ni, Co, Mo, etc...). Dès lors, ils percolent sous forme de nodules métalliques qui coalescent entre eux pour décanter rapidement en fond de four. A noter aussi que les pertes de métaux par envolement sont très faibles dans un four de production de laine de roche.

Alors que le procédé conventionnel de fabrication de laine de roche au cubilot à roche ou four électrique produit une matière secondaire en faible quantité et de faible valeur, à savoir une fonte à base de fer avec un peu de phosphore, le procédé selon l'invention produit une fonte en tout aussi faible quantité, mais hautement valorisable tout en produisant la laine de roche en grande quantité mais avec moins d'ajouts de coke liés à l'évaporation de l'eau de la bauxite.

Un autre avantage de l'invention peut être la réduction de la quantité de fer dans la fonte puisque moins de bauxite (très chargée en fer) est utilisée.

### Un procédé facilité

Enfin, l'exploitant peut récupérer du laitier coulé avec la fonte au phosphore grâce à une coulée en cuvier qui permet de ségréger par différence de densité en phase liquide la fonte en fond de cuvier et le laitier en surnageant ; à la solidification, la fonte et le laitier se séparent naturellement.

Classiquement, l'objectif étant l'obtention d'un laitier non mélangé à de la fonte, selon l'état de la technique on évacuait la fonte (pour mise en décharge) avec un peu de laitier entraîné à la coulée par gravité. Ainsi, pour une production de 50kT/an de laine de roche, il était perdu 2500T de laitier à la coulée de la fonte au phosphore par mise en décharge.

Avec l'invention, l'objectif est d'obtenir aussi une fonte valorisable. La coulée en cuvier destinée à la bonne récupération de la fonte permet, par séparation densimétrique des phases métal-laitier, de récupérer et recycler dans le cubilot à roche cette fraction de laitier perdue économisant cette même quantité de matières premières.

### Un procédé amélioré par rapport à ceux de l'art antérieur

Vis-à-vis de la filière classique du recyclage pyrométallurgique des catalyseurs, l'avantage de l'invention est majeur.

D'abord le rendement de récupération est significativement amélioré par rapport aux procédés pyrométallurgiques classiques.

D'autre part l'invention valorise l'alumine contenue dans les catalyseurs et/ou adsorbants, de façon idéale, puisque la laine de roche a besoin d'alumine, alors qu'elle est très mal ou pas du tout valorisée dans les procédés classiques pyrométallurgiques de recyclage de catalyseurs. Donc, en une seule étape, dans des conditions de fonctionnement plutôt énergétiquement favorables, deux produits hautement valorisables sont obtenus.

Vis-à-vis de la filière de recyclage hydrométallurgique (consistant à une lixiviation des métaux Mo, W, V par lixiviation alcaline), le recyclage des catalyseurs et/ou adsorbants selon l'invention dans le cadre de la production de laine de roche et de fonte présente d'autres avantages.

En effet, on opère sans ajout de réactif de lixiviation dangereux ou toxique, sans main d'œuvre, sans investissements de lixiviation (cuve, brassage, stockage de produits toxiques, tuyauteries, pompes, filtre presse et instrumentation), sans rejet liquide et sans co-produits difficiles à éliminer.

De plus les éléments Ni et Co sont valorisés, ce qui n'est pas ou peu le cas dans les procédés classiques car ces métaux ne sont pas extraits dans la filière hydrométallurgique. La fraction solide résultant de la lixiviation alcaline, riche en alumine, Ni et Co, peut être éventuellement reprise en pyrométallurgie pour récupération de Ni et Co. Mais compte tenu des faibles teneurs, l'économie de cette fusion n'est souvent pas favorable.

### Un avantage économique important

Au-delà des avantages techniques, les avantages économiques sont importants lorsque l'exploitant du cubilot à roche ou four électrique substitue une matière première neuve par des catalyseurs aluminiques moins coûteux.

L'alumine sous forme de bauxite coûte de l'ordre de 70 à 150€/T. A titre d'exemple, si l'exploitant doit corriger 10% d'Al2O3, alors il utilisera 20% de bauxite à 50% d'alumine contenue en charge. Si la bauxite vaut 100€/T alors pour 50KT/an de production de laine de roche et comme l'alumine des catalyseurs peut être considérée sans valeur sur le marché alors l'économie pourra être de 1M€ pour 5KT d'Al2O3 substituée.

D'autre part, avec l'invention, la fonte au phosphore est maintenant valorisable de par les métaux qu'elle contient, économisant sa mise en décharge soit de 10 à 15€/T, ce qui représente pour une production de 50kT/an de laine et 2500T de fonte une économie de 25 à 37.5K€/an.

L'économie sur l'enfournement de matières premières peut-être évalué à 10-15 €/T (coûts d'extraction et broyage-concassage de la roche de carrière et/ou laitier de haut-fourneau), plus sa correction en Al2O3 par exemple de 10% qu'elle contient déjà et avec une bauxite à 100 €/T qui représente 20€/T soit une économie de l'ordre de 75 à 87.5 k€/an.

Avec l'invention, l'exploitant réduit sa consommation de coke en cubilot et d'électricité en four à électrodes submergées pour déshydrater la bauxite, l'économie représente de 3 à 16% de la consommation de coke au cubilot et de 2 à 10% de la consommation d'électricité au four à électrodes submergées. Pour une production de 50 kT/an de laine de roche et 3750T de catalyseurs recyclés, l'économie est de l'ordre de 200 à 250k€/an.

Le gain global pour l'exploitant en production de laine de roche peut être de l'ordre de 1000k€/an pour une production de 50kT/an de laine de roche et 3750T/an de catalyseurs recyclés.

Un autre avantage est un procédé moins énergivore. En effet, les natures chimique et physique de l'alumine des catalyseurs jouent un rôle. C'est en effet un oxyde, peu ou pas hydraté, alors que la bauxite est constituée d'hydrate d'alumine Al(OH)3, de teneur en eau de constitution de 10 à 28% poids. Le phénomène de déshydratation étant très endothermique, la fusion de catalyseurs alumineux est donc beaucoup moins énergivore que celle de la bauxite d'une part par leur très faible teneur en eau et d'autre part du fait de leur porosité à comparer à celle des blocs de roche de bauxite.

### Des avantages environnementaux

De plus, l'invention est parfaitement positionnée dans le cadre du développement durable et de l'économie circulaire associés à la valorisation optimale des déchets dans des outils existants, économes en ressources naturelles et réduisant les tonnages de déchets mis en décharge.

L'exploitant en production de laine de roche trouve plusieurs avantages environnementaux selon l'invention.

Il utilise moins de matière première naturelle de type bauxite. Il trouve une solution de recyclage et de valorisation de certains de ses déchets de production, à savoir la fonte et le laitier associé. Il recycle des déchets externes, améliorant ainsi son bilan environnemental. Il réduit sa consommation énergétique avec un point de fusion plus bas, tout en améliorant la productivité et la fiabilité de sa production en supprimant en particulier les infondus.

Par rapport à la pyrométallurgie classique de recyclage des catalyseurs, la quantité de charge utilisée est beaucoup plus faible : coke, chaux, ferro-silicium, magnésie, minerais de fer. Des économies sont aussi réalisées sur les électrodes de four, sur les matériaux réfractaires des fours, et sur la consommation énergétique. De plus, on évite les réactifs toxiques, la consommation d'eau, les rejets aqueux contenant des traces de métaux, ainsi que les rejets solides.

Comme il ressort déjà de ce qui précède, le procédé selon l'invention présente de très nombreux avantages techniques, économiques et environnementaux.

### Un meilleur recyclage des métaux des catalyseurs et/ou adsorbants usés

Concernant le recyclage des catalyseurs (par exemple ceux d'HDT), l'invention valorise, idéalement et directement (en charge telle quelle) les minéraux contenus dans les catalyseurs. Dans la même étape de procédé, les métaux (par exemple Ni, Co, Mo, W, V) contenus dans les catalyseurs et/ou adsorbants sont récupérés dans la fonte produite avec un rendement de récupération significativement amélioré de quelques % par rapport aux filières pyrométallurgiques actuelles de recyclage de ces mêmes catalyseurs.

Vis-à-vis de la filière recyclage « pyrométallurgique », l'avantage de l'invention est majeur car direct, sans ajout de matière de charge spécifique (coke, minerais de fer, ferro-silicium, chaux, magnésie, énergie électrique, etc.), sans main d'œuvre, sans investissement de fusion et sans avoir à valoriser et transporter des laitiers pour recyclage en filière laine de roche ou cimenterie.

Vis-à-vis de la filière recyclage « hydrométallurgique », l'avantage de l'invention est majeur car direct, sans ajout de réactif de lixiviation toxique, sans main d'œuvre, sans investissements de lixiviation (cuve, brassage, stockage de produits toxiques, tuyauteries, pompes, filtre presse et instrumentation), sans rejet liquide et sans coproduit insoluble à éliminer. De plus les unités de Ni et Co sont valorisées, or ces métaux ne sont pas extraits dans la filière hydro métallurgique.

Le gain global pour le recycleur de catalyseurs peut être de l'ordre de 2300 k€/an pour une production de 50 kT/an de laine de roche et 3750 T/an de catalyseurs recyclés.

Ces catalyseurs et/ou adsorbants usés constituent des adjuvants de meilleure qualité que ceux de l'art antérieur pour la production de la laine de roche.

La phase minérale contenue dans les catalyseurs présente par une grande porosité. Ainsi sa fusibilité et sa mise en solution dans la fraction minérale fondue est très bonne. Ceci est à comparer avec l'alumine type bauxite ou corindon réputée difficile à fusionner avec des risques d'infondus engendrant soit des problèmes dans le cubilot, soit des rebuts de production de type perles infondues dans la laine de roche.

L'exploitant dispose ainsi d'une matière première de substitution de meilleure qualité que celle de ses enfournements traditionnels. Il rencontre le même niveau de métaux ferreux à extraire avec les catalyseurs qu'avec la bauxite ou assimilé. A ce jour les exploitants de cubilot à roche ne valorisent pas ou peu la fonte au phosphore qu'ils produisent. Ils trouvent ainsi via l'invention une filière de valorisation exemplaire.

En résumant, l'invention consiste en la substitution d'une matière première, à savoir la bauxite, contenant de l'alumine sous forme d'hydrate d'alumine AL(OH)3, donc contenant de l'eau de constitution à un niveau typique de 10 à 30%, par des catalyseurs et/ou adsorbant contenant une phase minérale riche en alumine, de préférence sous forme d'alumine sèche (telle que définie précédemment) et poreuse et pour certains catalyseurs contenant un fondant puissant tel le phosphore.

Dans la mesure où la teneur en alumine des catalyseurs et/ou adsorbant est supérieure à celle de la bauxite, alors pour une même correction en alumine dans la laine de roche, il sera utilisé moins de matière en charge, ce qui procure aussi des avantages du point de vue transport, stockage, transfert, volume et productivité. D'autre part, puisque les catalyseurs et/ou adsorbant contiennent moins d'eau que la bauxite, la quantité de coke nécessaire pour la fusion est plus faible dans le cas des catalyseurs. En effet, dans les procédés de l'état de la technique basés sur l'utilisation de la bauxite, une partie du coke sert pour la vaporisation de l'eau contenue dans la bauxite.

Plus précisément, concernant la quantité de catalyseurs et/ou adsorbant à utiliser, il est à noter que la teneur en alumine (sous forme d'hydrate d'alumine) de la bauxite est de 48 à 60%, alors que la teneur en alumine (sous forme Al2O3) dans les catalyseurs d'hydrotraitement est de 60 à 90% et dans les catalyseurs de type FCC, entre 45% et 80%. Par conséquent, en remplaçant la bauxite par les catalyseurs, et pour la même quantité en alumine nécessaire à la production de laine de roche, la quantité en kg de catalyseurs chargés sera inférieure à celle de la bauxite. En général typiquement pour des catalyseurs HDS, on chargera de 10 à 50% de matière en moins et pour des catalyseurs de FCC on chargera de 1 à 25% de matière en moins pour une correction en alumine identique avec une charge de type bauxite.

Concernant les quantités de coke, pour une consommation courante de coke de 120 à 200 kg/tonne de laitier, la réduction de consommation de coke en utilisant des catalyseurs plutôt que de la bauxite à correction d'alumine identique varie entre 3% et 16% lorsqu'on utilise, comme four de fusion, un cubilot à laine de roche. Dans le cas d'un four électrique à électrodes submergées, pour une consommation courante d'énergie électrique de 800 à 1200 kW/h par tonne de laitier, la réduction de consommation d'énergie en utilisant des catalyseurs plutôt que de la bauxite à correction d'alumine identique varie est de 2% à 10%.

Une autre caractéristique essentielle de l'invention réside dans le fait qu'elle utilise des catalyseurs usés, donc des déchets qu'il faut idéalement recycler. Or certains catalyseurs sont actuellement recyclés et d'autres sont mis en décharge. L'invention permet de recycler beaucoup plus de catalyseurs dans un spectre de composition chimique beaucoup plus large que dans l'état de l'art actuel.

## Revendications

1. Procédé de production de laine de roche et de fonte par fusion d'un mélange de matériaux tels que du basalte, du laitier de haut fourneau, du coke et des composants nécessaires à la fusion, avec un adjuvant contenant de l'alumine, ledit adjuvant permettant d'ajuster la teneur en alumine pour obtenir une laine de roche ayant la composition suivante (en % en poids): Al2O3 : 18-22 ; SiO2 : 40-50 ; CaO : 10-15 ; MgO : <10 ; FeO <2 ; Na2O <4 ; K20 <2, procédé du type comprenant les opérations de production par fusion d'un laitier et d'une fonte, de séparation du laitier et de la fonte et de procéder sur le laitier à une opération de fibrage puis de collage pour obtenir la laine de roche, **caractérisé en ce que** l'on utilise comme adjuvant au moins un catalyseur usé et/ou au moins un adsorbant usé, ledit catalyseur et/ou adsorbant contenant de l'alumine sous forme d'Al2O3.

2. Procédé selon la revendication 1, **caractérisé en ce que** ledit catalyseur et/ou adsorbant contient au moins un métal, et **en ce qu'**on récupère ledit métal dans la fonte.

3. Procédé selon l'une des revendications précédentes, **caractérisé en ce que** l'adjuvant comprend un ou plusieurs catalyseurs et/ou adsorbants.

4. Procédé selon l'une des revendications précédentes **caractérisé en ce que** ledit catalyseur et/ou adsorbant contient au moins un métal choisi dans le groupe constitué par les groupes VB, VIB et VIIIB de la Classification Périodique des Eléments.

5. Procédé selon la revendication 4 **caractérisé en ce que** le catalyseur et/ou adsorbant contient Ni et/ou Co et/ou Mo et/ou W et/ou V.

6. Procédé selon l'une des revendications précédentes **caractérisé en ce que** ledit catalyseur et/ou adsorbant contient du phosphore.

7. Procédé selon l'une des revendications précédentes **caractérisé en ce que** la densité du catalyseur et/ou de l'adsorbant est comprise entre 0,5 et 1.

8. Procédé selon l'une des revendications précédentes **caractérisé en ce que** le catalyseur et/ou adsorbant a un volume poreux total compris entre 0,2 et 0,9 ml/g et le plus souvent entre 0,3 et 0,7 ml/g.

9. Procédé selon l'une des revendications précédentes **caractérisé en ce que** la surface BET du catalyseur est comprise entre 20 et 400 m2/g et le plus souvent entre 100 et 300 m2/g, la surface BET de l'adsorbant est comprise entre 20 et 800 m2/g et le plus souvent entre 100 et 400 m2/g.

10. Procédé selon l'une des revendications précédentes **caractérisé en ce que** la fusion a lieu entre 1250°C et 1600°C, de préférence 1400°C à 1500°C.

11. Procédé selon l'une des revendications précédentes **caractérisé en ce que** l'on utilise un catalyseur ayant une teneur en S de 2 à 5% en poids.

12. Procédé selon l'une des revendications précédentes **caractérisé en ce que**, avant d'être chargé dans le procédé, ledit catalyseur et/ou adsorbant est soumis à une étape de grillage de façon à réduire sa teneur en S à au plus 5% en poids.

13. Procédé selon l'une des revendications précédentes **caractérisé en ce que** l'adjuvant comprend ledit catalyseur et/ou adsorbant ainsi que de la bauxite.

14. Procédé selon l'une des revendications 1 à 12 **caractérisé en ce que** l'adjuvant est constitué de bauxite et dudit catalyseur et/ou adsorbant.

15. Procédé selon l'une des revendications 1 à 12 **caractérisé en ce que** l'adjuvant est constitué dudit catalyseur et/ou adsorbant.

16. Procédé selon l'une des revendications précédentes pour produire de la laine de roche et de fonte par fusion en une seule étape.

## Patentansprüche

1. Verfahren zur Herstellung von Steinwolle und von Gusseisen durch Schmelzen einer Mischung von Materialien, wie Basalt, Hochofenschlacke, Koks und für das Schmelzen notwendigen Komponenten, mit einem Adjuvans, das Aluminiumoxid enthält, wobei es das Adjuvans gestattet, den Gehalt an Aluminiumoxid einzustellen, um eine Steinwolle mit der folgenden Zusammensetzung (in Gew.-%) zu erhalten: Al2O3: 18-22; Si02: 40-50; CaO: 10-15; MgO < 10; FeO < 2; Na2O < 4; K2O < 2; wobei das Verfahren von dem Typ ist, umfassend die Vorgänge der Herstellung durch Schmelzen einer Schlacke und eines Gusseisens, der Trennung der Schlacke und des Gusseisens und des Vornehmens eines Vorgangs der Zerfaserung, dann des Klebens an der Schlacke, um die Steinwolle zu erhalten,
**dadurch gekennzeichnet, dass** als Adjuvans mindestens ein verbrauchter Katalysator und/oder mindestens ein verbrauchtes Adsorptionsmittel verwendet werden, wobei der Katalysator und/oder das Adsorptionsmittel Aluminiumoxid in der Form von Al2O3 enthalten.

2. Verfahren nach Anspruch 1,
**dadurch gekennzeichnet, dass** der Katalysator und/oder das Adsorptionsmtitel mindestens ein Metall enthalten, und dadurch, dass das Metall in dem Gusseisen rückgewonnen wird.

3. Verfahren nach einem der vorhergehenden Ansprüche,
**dadurch gekennzeichnet, dass** das Adjuvans einen oder mehrere Katalysatoren und/oder Adsorptionsmittel umfasst.

4. Verfahren nach einem der vorhergehenden Ansprüche,
**dadurch gekennzeichnet, dass** der Katalysator und/oder das Adsorptionsmittel mindestens ein Metall enthalten, das aus der Gruppe bestehend aus den Gruppen VB, VIB und VIIIB des Periodensystems der Elemente ausgewählt wird.

5. Verfahren nach Anspruch 4,
**dadurch gekennzeichnet, dass** der Katalysator und/oder das Adsorptionsmittel Ni und/oder Co und/oder Mo und/oder W und/oder V enthalten.

6. Verfahren nach einem der vorhergehenden Ansprüche,
**dadurch gekennzeichnet, dass** der Katalysator und/oder das Adsorptionsmittel Phosphor enthalten.

7. Verfahren nach einem der vorhergehenden Ansprüche,
**dadurch gekennzeichnet, dass** die Dichte des Katalysators und/oder des Adsorptionsmittels zwischen 0,5 und 1 beträgt.

8. Verfahren nach einem der vorhergehenden Ansprüche,
**dadurch gekennzeichnet, dass** der Katalysator und/oder das Adsorptionsmittel ein poröses Gesamtvolumen zwischen 0,2 und 0,9 ml/g und am häufigsten zwischen 0,3 und 0,7 ml/g umfassen.

9. Verfahren nach einem der vorhergehenden Ansprüche,
**dadurch gekennzeichnet, dass** die BET Oberfläche des Katalysators zwischen 20 und 400 m²/g und am häufigsten zwischen 100 und 300 m²/g beträgt, wobei die BET Oberfläche des Absorptionsmittels zwischen 20 und 800 m²/g und am häufigsten zwischen 100 und 400 m²/g beträgt.

10. Verfahren nach einem der vorhergehenden Ansprüche,
**dadurch gekennzeichnet, dass** das Schmelzen zwischen 1250 °C und 1600 °C, vorzugsweise bei 1400 °C bis 1500 °C, stattfindet.

11. Verfahren nach einem der vorhergehenden Ansprüche,
**dadurch gekennzeichnet, dass** ein Katalysator mit einem Gehalt an S von 2 bis 5 Gew.-% verwendet wird.

12. Verfahren nach einem der vorhergehenden Ansprüche,
**dadurch gekennzeichnet, dass**, vor dem Laden in das Verfahren, der Katalysator und/oder das Adsorptionsmittel einem Röstschritt unterzogen werden, um deren Gehalt an S auf höchstens 5 Gew.-% zu reduzieren.

13. Verfahren nach einem der vorhergehenden Ansprüche,
**dadurch gekennzeichnet, dass** das Adjuvans den Katalysator und/oder das Adsorptionsmittel sowie Bauxit umfasst.

14. Verfahren nach einem der Ansprüche 1 bis 12,
**dadurch gekennzeichnet, dass** das Adjuvans aus Bauxit und dem Katalysator und/oder dem Adsorptionsmittel besteht.

15. Verfahren nach einem der Ansprüche 1 bis 12,
**dadurch gekennzeichnet, dass** das Adjuvans aus dem Katalysator und/oder dem Adsorptionsmittel besteht.

16. Verfahren nach einem der vorhergehenden Ansprüche, zur Herstellung von Steinwolle und von Gusseisen durch Schmelzen in einem einzigen Schritt.

## Claims

1. A method for producing rock wool and cast iron by melting a mixture of materials such as basalt, blast-furnace slag, coke and components necessary for melting, with an adjuvant containing alumina, said adjuvant making it possible to adjust the alumina content to obtain rock wool having the following composition (in wt%): Al₂O₃: 18-22; SiO₂: 40-50; CaO: 10-15; MgO: <10; FeO <2; Na₂O <4; K₂O <2, a method of the type comprising the operations of producing slag and cast iron by melting, separating the slag and the cast iron and subjecting the slag to a fiber forming operation and then bonding to obtain rock wool, **characterized in that** at least one spent catalyst and/or at least one spent adsorbent is used as adjuvant, said catalyst and/or adsorbent containing alumina in the form of Al₂O₃.

2. The method as claimed in claim 1, **characterized in that** said catalyst and/or adsorbent contains at least one metal, and **in that** said metal is recovered in the cast iron.

3. The method as claimed in one of the preceding claims, **characterized in that** the adjuvant comprises one or more catalysts and/or adsorbents.

4. The method as claimed in one of the preceding claims, **characterized in that** said catalyst and/or adsorbent contains at least one metal selected from the group consisting of groups VB, VIB and VIIIB of the Periodic Table.

5. The method as claimed in claim 4, **characterized in that** the catalyst and/or adsorbent contains Ni and/or Co and/or Mo and/or W and/or V.

6. The method as claimed in one of the preceding claims, **characterized in that** said catalyst and/or adsorbent contains phosphorus.

7. The method as claimed in one of the preceding claims, **characterized in that** the density of the catalyst and/or of the adsorbent is between 0.5 and 1.

8. The method as claimed in one of the preceding claims, **characterized in that** the catalyst and/or adsorbent has a total pore volume between 0.2 and 0.9 ml/g and most often between 0.3 and 0.7 ml/g.

9. The method as claimed in one of the preceding claims, **characterized in that** the BET surface area of the catalyst is between 20 and 400 m²/g and most often between 100 and 300 m²/g, and the BET surface area of the adsorbent is between 20 and 800 m²/g and most often between 100 and 400 m²/g.

10. The method as claimed in one of the preceding claims, **characterized in that** melting takes place between 1250°C and 1600°C, preferably 1400°C to 1500°C.

11. The method as claimed in one of the preceding claims, **characterized in that** a catalyst is used having an S content from 2 to 5 wt%.

12. The method as claimed in one of the preceding claims, **characterized in that**, before being charged in the method, said catalyst and/or adsorbent is submitted to a step of roasting so as to reduce its S content to at most 5 wt%.

13. The method as claimed in one of the preceding claims, **characterized in that** the adjuvant comprises said catalyst and/or adsorbent as well as bauxite.

14. The method as claimed in one of claims 1 to 12, **characterized in that** the adjuvant consists of bauxite and of said catalyst and/or adsorbent.

15. The method as claimed in one of claims 1 to 12, **characterized in that** the adjuvant consists of said catalyst and/or adsorbent.

16. The method as claimed in one of the preceding claims for producing rock wool and cast iron by melting in a single step.
